# EUROPÄISCHE PATENTSCHRIFT

(11) **EP 1 569 793 B1**
(45) Veröffentlichungstag und Bekanntmachung des Hinweises auf die Patenterteilung: **26.08.2009**
(21) Anmeldenummer: 03782290.5
(22) Anmeldetag: 03.12.2003
(51) Int. Cl.: B32B 15/08, B63B 3/20

(54) **VERBUNDELEMENTE, INSBESONDERE KAROSSERIETEILE**
COMPOSITE ELEMENTS, ESPECIALLY CAR BODY PARTS
ELEMENTS COMPOSITES, EN PARTICULIER PIECES DE CARROSSERIE

(30) Priorität: 06.12.2002 DE 10257396
(43) Veröffentlichungstag der Anmeldung: 07.09.2005
(73) Patentinhaber: BASF SE, 67056 Ludwigshafen (DE)
(72) Erfinder: DRÖGE, Thomas, 67434 Neustadt (DE)
(86) Internationale Anmeldenummer: PCT/EP2003/013620
(87) Internationale Veröffentlichungsnummer: WO 2004/052643

(56) Entgegenhaltungen:
- EP-A- 0 421 222
- WO-A-90/05633
- GB-A- 2 066 156
- US-A- 3 864 201

## Beschreibung

Die Erfindung betrifft Verbundelemente, beispielsweise für den Automobilbau oder z.B. als Verkleidungselemente in Immobilien, insbesondere Karosserieteile von Automobilen, Lastkraftwagen, Schiffen oder Flugzeugen, bevorzugt Karosserieteile von Automobilen oder Lastkraftwagen, die die folgende Schichtstruktur aufweisen:
(i) 0,05 mm bis 2 mm, bevorzugt 0,1 mm bis 0,5 mm Metall,
(ii) 0,1 mm bis 2 mm, bevorzugt 0,3 mm bis 1,2 mm Polyisocyanat-Polyadditionsprodukte, bevorzugt Polyurethane, die gegebenenfalls Isocyanurat- und/oder Harnstoffstrukturen aufweisen können, mit einen Speichermodul nach DIN EN ISO 6721, bevorzugt gemessen nach dem Torsionspendel-Verfahren, zwischen 60 und 350 MPa bei Temperaturen zwischen -20 und +80°C und/oder ein Speichermodul nach DIN EN ISO 6721, bevorzugt gemessen nach dem Torsionspendel-Verfahren, von mindestens 1,7 MPa bei Temperaturen zwischen +160 und +220°C, bevorzugt erhältlich durch bevorzugt lösungsmittelfreie Umsetzung von (a) Isocyanaten und (b) gegenüber Isocyanaten reaktiven Verbindungen bevorzugt in Kontakt mit den Schichten (i) und (iii),
(iii) 0,05 mm bis 2 mm, bevorzugt 0,1 mm bis 0,5 mm Metall.

Unter dem Ausdruck "lösungsmittelfrei" ist zu verstehen, dass die Umsetzung von (a) mit (b) in Abwesenheit von organischen chemischen Verbindungen mit einem Siedepunkt bei einem Druck von 1 bar von 50°C bis 170°C durchgeführt wird, insbesondere in Abwesenheit der in US 4 859 523, Spalte 4, Zeile 68 bis Spalte 5, Zeile 5 genannten Lösungsmittel.

Außerdem betrifft die Erfindung Verfahren zur Herstellung von Karosserieteilen von Automobilen, Lastkraftwagen oder Flugzeugen sowie Automobiltüren, Kotflügel, Automobildächer, Motorhauben von Automobilen, Heckklappen von Automobilen, Außenhäute von Flugzeugen, nicht-tragende Verkleidungen im Schiffbau, die die oben genannte erfindungsgemäße Schichtstruktur enthalten.

Im Automobilbau wird Stahl wegen seiner hervorragenden mechanischen Eigenschaften als Material z.B. für die Karosserie eingesetzt. Ein Nachteil von Stahl ist das hohe Gewicht. Als Alternative zum Stahl wird z.B. Aluminium eingesetzt, dass leichter ist, aber schlechtere mechanische Eigenschaften hat und teurer ist.

Neben reinen Metallkonstruktionen sind bereits Verbundelemente im Automobilbau bekannt.

EP-A 177 952 beschreibt die Verwendung eines Metall-Kunststoff-Metall-Verbundes als Vibrationsdämpfungsmaterial. Der Kunststoff ist ein Polyester, wobei zur verbesserten Haftung zwischen Metall und Polyester Haftvermittler eingesetzt werden.

EP-A 500 376 beschreibt die Verwendung eines Metall-Kunststoff-Metall-Verbundes zur Vibrationsdämpfung mit einer Stahldicke von 0,2 bis 2 mm und einer Kunststoffdicke von 0,02 bis 0,15 mm. Der Kunststoff wird auf Basis von Prepolymeren hergestellt. US 4 859 523 beschreibt die Verwendung eines Stahl-Kunststoff-Stahl-Verbundes, wobei der Kunststoff ein Polyurethan auf Basis eines Polyesterdiols ist und eine Glastemperatur zwischen 0 und 70°C aufweist. In beiden Schriften weist die Kunststoffschicht eine Glastemperatur von kleiner 70°C auf. Diese geringe Glastemperatur, auf deren Bedeutung insbesondere in der US 4 859 523 hingewiesen wird, führt zu einer geringen Härte und, insbesondere bei hohen Temperaturen, zu Schwierigkeiten bei der Verarbeitung der Verbundelemente. Auch die Bereitstellung der Verbundelemente gemäß EP-A 500 376 und US 4859523 durch Herstellung der Kunststoffschicht in einem Lösungsmittel und anschließender Trocknung auf der Metallschicht ist aufwendig und aufgrund des Einsatzes von Lösungsmitteln problematisch.

EP-A 598 428 beschreibt die Verwendung eines Verbundes aus Metall-Polypropylen-Metall für den Automobilbau. Der Verbund ist mindestens bis zu einer Temperatur von 135°C stabil. Das Metall ist entweder Stahl oder Aluminium mit einer Dicke von 0,08 bis 0,3 mm. Das Polypropylen weist eine Dicke von 0,5 bis 2 mm auf. Das Material ist zum Kaltumformen geeignet. Zur Erzeugung von Haftung zwischen Metall und Polypropylen ist ein Haftmittel notwendig, der in einem zusätzlichen Arbeitsschritt aufgetragen werden muss. EP-A 1 106 861 beschreibt die Verwendung eines Stahl-Polypropylen-Stahl-Verbundes mit einer Stahldicke von 0,25 mm und einer Polypropylendicke von 1 mm. Der Verbund soll eine verbessertes Energieabsorptionsvermögen bei Zusammenstößen aufweisen. Zur Erzeugung von Haftung zwischen Metall und Polypropylen ist ein Haftvermittler notwendig. Die Temperaturstabilität des Polypropylens bei 200°C ist erfahrungsgemäß nicht ausreichend. JP 62 264 940 beschreibt die Verwendung eines Metall-Polypropylen-Metall-Verbundes. Um die erforderliche Temperaturstabilität des Polypropylens zu erreichen, werden faserartige Füllstoffe eingesetzt.

US 4 594 292 beschreibt einen Metall-Kunststoff-Metall-Verbund, wobei die Kunststoffschicht aus drei Lagen mit unterschiedlichen Eigenschaften aufgebaut ist, um ein Biegen des Verbundes um 180° ohne Delamination zu ermöglichen.

US 4 599 261 beschreibt einen Metall-Kunststoff-Metall-Verbund. Der Verbund ist leichtgewichtig, schallabsorbierend und stabil beim Lackbrennverfahren. Der Kunststoff wird in mit einer Schichtdicke von 0,13 bis 1 mm eingesetzt. Als Kunststoff ist für die Herstellung des Verbundes eine Mischung eines Blockcopolymers, eines 1-Buten-Polymers und eines thermoplastischen Harzes notwendig.

Verbesserungsbedarf bei diesen bekannten Verbundelementen besteht insbesondere in der Temperaturbeständigkeit des Polymers, in den mechanischen Eigenschaften und/oder in der Verarbeitbarkeit bzw. in der Haftung zwischen Kunststoff und Metall. Zudem war bei hervorragender Festigkeit und Elastizität des Verbundelements eine deutliche Gewichtsreduzierung erwünscht.

Ziel der vorliegenden Erfindung war es daher, ein neues Material insbesondere für den Automobilbau zu entwickeln, das die Vorteile von Stahl und Aluminium verbindet. Als zusätzliche Anforderungen muss das Material (1) eine Temperaturbeständigkeit bis mindestens 200°C aufweisen, da solche Temperaturen bei dem Trocknungsprozess nach der Lackierung erreicht werden können, (2) bei 200°C noch eine Mindeststeifigkeit aufweisen (3) eine ausreichende Haftung zwischen Metall und Kunststoff aufweisen und (4) zum Kaltumformen geeignet sein bzw. auf den üblichen Maschinen (z.B. Pressen) zur Stahlverarbeitung im z.B. Automobilbau einsetzbar sein.

Diese Aufgabe konnte durch die eingangs dargestellten Verbundelemente gelöst werden.

Die erfindungsgemäßen Verbundelemente sind leichtgewichtig, schallabsorbierend und stabil beim Lackbrennverfahren. Zudem weisen die Verbundelemente auch bei Temperaturen von 200°C eine hohe Steifigkeit auf. Durch die hervorragende Haftung des Polyurethans zum Metall einerseits und die hervorragende Bruchdehnung des Polyurethans von über 30 %, bevorzugt über 50 %, besonders bevorzugt über 100 % andererseits, kann der Verbund bevor und nachdem er hohen Temperaturen ausgesetzt war auf den üblichen Maschinen (z.B. Pressen) zur Stahlverarbeitung im z.B. Automobilbau eingesetzt werden, z.B. beim Kaltumformen.

Als Schichten (i) und (iii) können gleiche oder verschiedene, bevorzugt gleiche, allgemein bekannte Metalle eingesetzt werden, z.B. Aluminium, Aluminumlegierungen, gegebenenfalls Oberflächenmodifiziertes Kupfer, Bronze, Magnesium, Magnesiumlegierungen, Stahl, verzinkter Stahl, rostfreier Stahl, galvanisierter Stahl, verchromte Metalle, z.B. verchromter Stahl, bevorzugt Stahl oder Stahllegierungen, z.B. Chrom/Chromoxid-beschichteter Stahl oder Zinn-freier Stahl, besonders bevorzugt Stahl. Die beiden Metallschichten (i) und (iii) auf jeder Seite des Kunststoffs können entweder aus dem gleichen Material sein oder aus verschiedenen und sie können entweder die gleiche Dicke haben oder unterschiedliche.

Die Polyisocyanat-Polyadditionsprodukte weisen bevorzugt eine Dichte von 800 kg/m³ bis 1200 kg/m³, besonders bevorzugt 900 kg/m³ bis 1100 kg/m³ auf.

Der Speichermodul (Torsionspendel-Verfahren) der Polyisocyanat-Polyadditionsprodukte beträgt zwischen 60 und 350 MPa bei Temperaturen zwischen -20 und +80°C (nach DIN EN ISO 6721) und/oder mindestens 1,7 MPa bei Temperaturen zwischen +160 und +220°C (nach DIN EN ISO 6721). Die Bruchdehnung nach DIN EN ISO 527 der Polyisocyanat-Polyadditionsprodukte (ii) ist größer als 30 %, bevorzugt größer als 50 %, insbesondere größer als 100 %. Im T-Peel-Test weisen die Polyisocyanat-Polyadditionsprodukte (ii) bevorzugt eine Haftung an die Schicht (i) und/oder (iii) von mindestens 30 N/cm, besonders bevorzugt mindestens 50 N/cm auf. Die Glastemperatur der Polyisocyanat-Polyadditionsprodukte (ii) ist bevorzugt größer als 75°C, besonders bevorzugt 80°C bis 220°C, insbesondere 80°C bis 150°C. Die Messung der Glastemperatur ist dem Fachmann allgemein bekannt und vielfältig beschrieben. In dieser Schrift bedeutet die Glastemperatur das bei höheren Temperaturen liegende Maximum der tan Delta-Kurve, die bei der Torsionsmodulmessung, bevorzugt nach DIN EN ISO 6721, aus den beiden gemessenen Speicher- und Verlustmodulkurven berechnet wird. Bevorzugt erfolgt die Messung nach der Methode, die in DIN EN ISO 6721, Teil 7 beschrieben ist.

Diese Mindestanforderungen an das Sandwich und das Elastomer werden auch nach einer Wärmelagerung von 1 h bei 200°C erfüllt.

Bevorzugt können die Polyisocyanat-Polyadditionsprodukte (ii) Füllstoffe enthalten, deren Durchmesser bevorzugt dem Durchmesser der Schicht (ii) entspricht. Durch die Abstimmung des Füllstoffes mit dem gewünschten Durchmesser der Schicht (ii) können Abstandshalter bei der Herstellung der Verbundelemente gespart werden.

Die Herstellung der Verbundelemente kann beispielsweise derart erfolgen, dass das Metall auf einer Doppelbandanlage von Rollen abgerollt und entweder kontinuierlich oder Stücken verarbeitet wird. Der Herstellprozess sollte bevorzugt einen konstanten Abstand der beiden Metallschichten gewährleisten. Das Polyisocyanat-Polyadditionsprodukt, insbesondere das Polyurethan kann auf verschiedene Arten mit dem Metall zusammengebracht werden:

Polyol- und Isocyanatkomponente können mit Hoch- oder Niederdruckmaschine miteinander vermischt und als Flüssigkeit auf das Metall aufgetragen werden. Hierbei kann die reaktive Flüssigkeit auf eine oder beide Stahlplatten in einer oder mehreren Schichten aufgetragen werden. Werden mehr als eine Schicht aufgetragen, kann die Zusammensetzung der einzelnen Schichten unterschiedlich sein. Das Auftragen der reaktiven Flüssigkeit kann durch Aufgießen, Versprühen oder Bestreichen erfolgen.

Nach dem Auftragen der reaktiven Flüssigkeit kann der noch nicht ausreagierte Verbund mit Pressen bzw. Rollen so auf die gewünschte Dicke des Verbundes gebracht werden, dass es zu keinen Lufteinschlüssen zwischen Polymer und Metall kommt. Die erfindungsgemäße Dicke des Verbundes kann auch dadurch eingestellt werden, dass die reaktive Flüssigkeit zur Herstellung des Polyurethans einen oder mehrere Füllstoffe enthält, die einen Durchmesser haben, der dem gewünschten Abstand der Stahlplatten entspricht oder dadurch, dass so viele dünne Polymerschichten mit definierter Dicke übereinandergelagert werden bis sich die gewünschte Gesamtdicke ergibt oder dadurch, dass der Verbund aus Metall und flüssiger Reaktionskomponente durch einen Spalt zwischen einem oder mehreren aufeinanderfolgenden Walzenpaaren hindurchgepresst wird. Wenn mehr als ein Walzenpaar verwendet wird, können die Walzen zueinander jeweils den gleichen oder verschiedene Abstände haben, bevorzugt wird der Abstand der Walzen bei jedem nachfolgenden Walzenpaar kleiner.

Alternativ kann das Polyurethan zu einer Folie mit der gewünschten Dicke verarbeitet werden und mit Haftvermittler z.B. auf Polyurethanbasis zwischen die Stahlplatten geklebt werden. Die Folie kann ebenfalls kontinuierlich verarbeitet werden und zwischen die Stahlplatten eingezogen werden.

Das Verfahren zur Herstellung der erfindungsgemäßen Verbundelemente, insbesondere der erfindungsgemäßen Karosserieteilen von Automobilen, Lastkraftwagen oder Flugzeugen, insbesondere der erfindungsgemäßen Karosserieteilen von Automobilen kann bevorzugt derart erfolgen, dass man Verbundelemente, die die folgende Schichtstruktur aufweisen:
(i) 0,05 mm bis 2 mm, bevorzugt 0,1 mm bis 0,5 mm Metall,
(ii) 0,1 mm bis 2 mm, bevorzugt 0,3 mm bis 1,2 mm Polyisocyanat-Polyadditionsprodukte, bevorzugt Polyurethane, die gegebenenfalls Isocyanurat- und/oder Harnstoffstrukturen aufweisen können, bevorzugt mit einen Speichermodul nach DIN EN ISO 6721, bevorzugt gemessen nach dem Torsionspendel-Verfahren, zwischen 60 und 350 MPa bei Temperaturen zwischen -20 und +80 °C und/oder ein Speichermodul nach DIN EN ISO 6721, bevorzugt gemessen nach dem Torsionspendel-Verfahren, von mindestens 1,7 MPa bei Temperaturen zwischen +160 und +220 °C, bevorzugt erhältlich durch bevorzugt lösungsmittelfreie Umsetzung von (a) Isocyanaten und (b) gegenüber Isocyanaten reaktive Verbindungen bevorzugt in Kontakt mit den Schichten (i) und (iii),
(iii) 0,05 mm bis 2 mm, bevorzugt 0,1 mm bis 0,5 mm Metall in einer Presse formt, bevorzugt kalt umformt.

Dabei kann man bevorzugt in einem kontinuierlichen Prozess das Metall der Schichten (i) und (iii), beispielsweise mit einer Breite von üblicherweise 1 m bis 2 m, bevorzugt 1,4 m bis 1,6 m, beispielsweise durch Abrollen von entsprechenden Rollen bevorzugt parallel bevorzugt horizontal bevorzugt mit gleicher Geschwindigkeit in eine Bandanlage einführen und in dieser Bandanlage die flüssigen Ausgangskomponenten, d.h. die (a) Isocyanate und die (b) gegenüber Isocyanaten reaktiven Verbindungen zur Herstellung der (ii) Polyisocyanat-Polyadditionsprodukte zwischen (i) und (iii) bevorzugt automatisch bevorzugt über einen Mischkopf eintragen, beispielsweise durch Aufgießen, Aufstreichen oder Einsprühen auf die zur jeweils anderen Schicht gerichteten Oberfläche von (i) oder (iii), und bevorzugt nach Umsetzung der Ausgangskomponenten zur Herstellung von (ii) das bevorzugt ebene Verbundelement gegebenenfalls zuschneiden und in einer Presse bevorzugt kalt verformen. Die Geschwindigkeit, mit der die Metallschichten (i) und (iii) durch die Bandanlage bewegt werden, beträgt bevorzugt 5 m/min bis 20 m/min. Das Einfüllen der flüssigen Ausgangskomponenten kann mittels üblicher Dosierapparaturen beispielsweise über einen allgemein bekannten Mischkopf erfolgen. Die Austragung der flüssigen Komponenten kann dabei nach beispielsweise aus der Herstellung von Sandwichelementen mit Polyurethankern mittels Bandanlagen allgemein bekannten Verfahren und Vorrichtungen erfolgen. Als Dosierapparaturen kommen beispielsweise Hoch- und Niederdruckmaschinen, vorzugsweise Hochdruckmaschinen in Betracht. Die Förderleistung kann in Abhängigkeit des zu befüllenden Volumens zwischen (i) und (iii) variiert werden. Um eine vollständige Befüllung des Raumes zwischen (i) und (iii) zu gewährleisten, wird die Förderleistung und Fördereinrichtung bevorzugt auf die Bandgeschwindigkeit abgestimmt. Bevorzugt handelt es sich um Niederdruck- oder besonders bevorzugt Hochdruckmaschinen, bevorzugt mit Kolbendosierung, besonders bevorzugt Axialkolbendosierung, wobei bevorzugt der Vorratsbehälter mit Rührwerk und bevorzugt temperierbar ausgestaltet ist und bevorzugt ein Kreislauf Vorratsbehälter-Mischkopf-Vorratsbehälter vorliegt, wobei bevorzugt die Austragsleistung 1 bis 30 kg/min beträgt. Die Ausgangskomponenten zur Herstellung der Polyisocyanat-Polyadditionsprodukte werden üblicherweise bei einer Temperatur von 0 bis 100°C, vorzugsweise von 20 bis 60°C, gemischt und wie bereits beschrieben in den Raum zwischen (i) und (iii) eingebracht. Die Vermischung kann mechanisch mittels eines Rührers oder einer Rührschnecke, bevorzugt aber durch das bei Hochdruckmaschinen übliche Gegenstromprinzip erfolgen, bei dem A- und B-Komponenten-Strahl sich im Mischkopf unter jeweils hohem Druck treffen und vermischen, wobei der Strahl einer jeden Komponente auch geteilt sein kann. Die Reaktionstemperatur, d.h. die Temperatur, bei die Umsetzung erfolgt, beträgt in Abhängigkeit von.der Materialdicke üblicherweise > 20°C, bevorzugt 50 bis 150°C.

Die seitlichen Ränder des Raumes zwischen (i) und (iii), der mit (ii) ausgefüllt wird, können bevorzugt mit allgemein üblichen Materialien, z.B. mit Kunststoff-, Papier- oder Metallfolien oder -platten, abgedichtet werden. Die seitlichen Begrenzungen können verklebt, verschweißt oder angepresst werden und gegebenenfalls auch als Abstandshalter zwischen den Schichten (i) und (iii) dienen.

Alternativ ist es möglich, dass man in einem kontinuierlichen Prozess das Metall der Schichten (i) und (iii) sowie zwischen diese Schichten eine Polyisocyanat-Polyadditionsprodukt-Folie (ii) mit einer Dicke zwischen 0,1 mm und 2 mm bevorzugt parallel bevorzugt horizontal bevorzugt mit gleicher Geschwindigkeit in eine Bandanlage einführt und in dieser Bandanlage beispielsweise mittels eines allgemein bekannten Haftvermittlers, beispielsweise . Klebstoffes auf Polyurethanbasis, oder durch Aufschmelzen der Polyisocyanat-Polyadditionsprodukte (ii) miteinander haftend verbindet, das bevorzugt ebene Verbundelement gegebenenfalls zuschneidet und in einer Presse bevorzugt kalt verformt.

Die Oberflächen von (i) und (iii) können beschichtet sein oder vor der Herstellung der Verbundelemente zur Reinigung und Erhöhung der Oberflächenrauhigkeit aufgeraut werden. Die Oberflächen von (i) und (iii), an die (ii) haften soll, sind bevorzugt frei von anorganischen und/oder organischen Stoffen, die eine Haftung vermindern, beispielsweise Staub, Schmutz, Ölen und Fetten oder allgemein als Formtrennmitteln bekannten Stoffen. Zur Verbesserung der Haftung zwischen Polyurethan und Metall, beispielsweise Stahl kann die Stahloberfläche des weiteren z.B. durch Corona, Beflammung und Beschichtung mit einem Haftvermittler vorbehandelt werden.

Geeignete Bandanlagen sind allgemein bekannt, kommerziell erhältlich und beispielsweise zur Herstellung von Polyurethanhartschaumsandwichelementen allgemein bekannt.

Das Verformen des Verbundelementes erfolgt bevorzugt, nachdem entweder die flüssigen Ausgangskomponenten zum (ii) Polyisocyanat-Polyadditionsprodukt ausreagiert haben oder der Klebevorgang zur Erzeugung der haftenden Verbindung zwischen den Schichten (i) und (ii) bzw. (ii) und (iii) abgeschlossen ist. Das Formen oder Verformen des Verbundelementes kann mittels üblicher Pressen bei Temperaturen von 5°C bis 50°C, bevorzugt 10°C bis 35°C erfolgen. Eine Verformung des Verbundelementes bei diesen Temperaturen wird üblicherweise auch "Kaltverformung" genannt. Aufgrund des elastischen Material als Schicht (ii) sowie der guten Haftung von (ii) an (i) und (iii) kommt es bei dieser Formung üblicherweise nicht zu einer Ablösung der Schicht (ii) von (i) oder (iii).

Die erfindungsgemäße hergestellten Verbundelemente werden bevorzugt auf ihrer im Einsatz sichtbaren Oberfläche nach üblichen Verfahren mit allgemein bekannten Lacken lackiert, wobei ein üblicher Lackaufbau mit Grundierung usw. gewählt werden kann. Bevorzugt kann man den Lack bei einer Temperatur von mindestens 200 °C trocknen. Gerade bei dieser weiteren Verarbeitung der erfindungsgemäßen Karosserieteile nach der Formung in der Presse zeigt sich der Vorteil des erfindungsgemäßen Systems, da es auch bei hohen Temperaturen stabil ist und eine Verformung des Verbundelementes bei Temperaturen von 200 °C vermieden wird.

Bevorzugt enthält die Flüssigkeit zur Herstellung von (ii) (a) Isocyanate und (b) gegenüber Isocyanaten reaktive Verbindungen. Die Schicht (ii) stellt somit bevorzugt Polyisocyanat-Polyadditionsprodukte dar. In dieser Schrift sind unter den Ausdrücken "Ausgangsstoffe" oder "Ausgangskomponenten" insbesondere (a) Isocyanate und (b) gegenüber Isocyanaten reaktive Verbindungen zu verstehen, aber gegebenenfalls, soweit sie zum Einsatz kommen, auch (c) Gase, (d) Katalysatoren, (e) Hilfsmittel und/oder (f) Treibmittel.

Die Herstellung der erfindungsgemäßen Polyisocyanat-Polyadditionsprodukte (ii), üblicherweise Polyurethane, die gegebenenfalls Harnstoff- und/oder Isocyanuratstrukturen aufweisen können, kann durch allgemein bekannte Umsetzung von (a) Isocyanaten mit (b) gegenüber Isocyanaten reaktiven Verbindungen gegebenenfalls in Gegenwart von Treibmitteln (f), gegebenenfalls 1 bis 50 Volumen-%, bezogen auf das Volumen der Polyisocyanat-Polyadditionsprodukte, mindestens eines Gases (c), (d) Katalysatoren und/oder (e) Hilfsmitteln erfolgen. Bevorzugt werden (f) Treibmittel anstelle von (c) Gasen verwendet.

Bevorzugt erfolgt die Herstellung der Polyisocyanat-Polyadditionsprodukte (ii) durch Umsetzung von (a) Isocyanaten mit (b) gegenüber Isocyanaten reaktive Verbindungen gegebenenfalls in Gegenwart von Katalysatoren (d), (e) Hilfsmitteln und/oder (f) Treibmitteln sowie in Abwesenheit von Lösungsmitteln. Unter dem Ausdruck "Lösungsmittel" sind insbesondere allgemein bekannte organische Verbindungen zu verstehen, insbesondere solche, die gegenüber (a) und (b) inert sind und nach Umsetzung von (a) mit (b) aus dem Reaktionsprodukt entfernt werden, z.B. organische Verbindungen mit einem Siedepunkt bei einem Druck von 1 bar von 50°C bis 170°C.

Die Ausgangsstoffe (a), (b), (c), (d), (e) und (f) in dem erfindungsgemäßen Verfahren werden im Folgenden beispielhaft beschrieben:

Als Isocyanate (a) kommen die an sich bekannten aliphatischen, cycloaliphatischen, araliphatischen und/oder aromatischen Isocyanate, bevorzugt Diisocyanate in Frage, die gegebenenfalls nach allgemein bekannten Verfahren biuretisiert und/oder iscyanuratisiert worden sein können. Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4, Lysinesterdiisocyanate (LDI), Hexamethylendiisocyanat-1,6 (HDI), Cyclohexan-1,3- und/oder 1,4-diisocyanat, 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, 1-Isocyanato-3,3,5-trimethyl-5-isocyanatomethylcyclohexan (IPDI), 2,4- und/oder 2,6-Toluylendiisocyanat (TDI), 4,4'-, 2,4'- und/oder 2,2'-Diphenylmethandiisocyanat (MDI), Polyphenylpolymethylen-polyisocyanate und/oder Mischungen enthaltend mindestens zwei der genannten Isocyanate. Außerdem können Ester-, Harnstoff-, Allophanat-, Carbodiimid-, Uretdion- und/oder Urethangruppen enthaltende Di- und/oder Polyisocyanate in dem erfindungsgemäßen Verfahren eingesetzt werden. Bevorzugt werden 2,4'-, 2,2'- und/oder 4,4'-MDI und/oder Polyphenylpolymethylen-polyisocyanate eingesetzt, besonders bevorzugt Mischungen enthaltend Polyphenylpolymethylen-polyisocyanate und mindestens eines der MDI-Isomere.

Als (b) gegenüber Isocyanaten reaktive Verbindungen können beispielsweise Verbindungen eingesetzt werden, die als gegenüber Isocyanaten reaktive Gruppen Hydroxyl-, Thiol- und/oder primäre und/oder sekundäre Aminogruppen aufweisen und üblicherweise ein Molekulargewicht von 60 bis 10000 g/mol aufweisen, z.B. Polyole ausgewählt aus der Gruppe der Polymerpolyole, Polyetherpolyalkohole, Polyesterpolyalkohole, Polythioether-polyole, hydroxylgruppenhaltigen Polyacetale und hydroxylgruppenhaltigen aliphatischen Polycarbonate oder Mischungen aus mindestens zwei der genannten Polyole. Diese Verbindungen weisen üblicherweise eine Funktionalität gegenüber Isocyanaten von 2 bis 6 und ein Molekulargewicht von 400 bis 8000 auf und sind dem Fachmann allgemein bekannt.

Beispielsweise kommen als Polyetherpolyalkohole, die nach bekannter Technologie durch Anlagerung von Alkylenoxiden, beispielsweise Tetrahydrofuran, 1,3-Propylenoxid, 1,2- bzw. 2,3-Butylenoxid, Styroloxid und vorzugsweise Ethylenoxid und/oder 1,2-Propylenoxid an übliche Startersubstanzen erhältlich sind. Als Startersubstanzen können beispielsweise bekannte aliphatische, araliphatische, cycloaliphatische und/oder aromatische Verbindungen eingesetzt werden, die mindestens eine, bevorzugt 2 bis 4 Hydroxylgruppen und/oder mindestens eine, bevorzugt 2 bis 4 Aminogruppen enthalten. Beispielsweise können als Startersubstanzen Ethandiol, Diethylenglykol, 1,2- bzw. 1,3-Propandiol, 1,4-Butandiol, 1,5-Pentandiol, 1,6-Hexandiol, 1,7-Heptandiol, Glycerin, Trimethylolpropan, Neopentylglykol, Zucker, beispielsweise Saccharose, Pentaerythrit, Sorbitol, Ethylendiamin, Propandiamin, Neopentandiamin, Hexamethylendiamin, Isophorondiamin, 4,4'-Diaminodicyclohexylmethan, 2-(Ethylamino)ethylamin, 3-(Methylamino)propylamin, Diethylentrimamin, Dipropylentriamin und/oder N,N'-Bis(3-aminopropyl)-ethylendiamin eingesetzt werden.

Die Alkylenoxide können einzeln, alternierend nacheinander oder als Mischungen verwendet werden. Bevorzugt werden Alkylenoxide verwendet, die zu primären Hydroxylgruppen in dem Polyol führen. Besonders bevorzugt werden als Polyole solche eingesetzt, die zum Abschluss der Alkoxylierung mit Ethylenoxid alkoxyliert wurden und damit primäre Hydroxylgruppen aufweisen.

Als Polymerpolyole, einer speziellen Klasse der Polyetherpolyole, können allgemein aus der Polyurethanchemie bekannte Verbindungen eingesetzt werden, bevorzugt Styrol-Acrylnitril-Pfropfpolyole.

Gerade der Einsatz von Polymerpolyolen kann den Schrumpf des Polyisocyanat-Polyadditionsproduktes, beispielsweise des Polyurethans deutlich vermindern und somit zu einer verbesserten Haftung von (ii) an (i) und (iii) führen. Gegebenenfalls können als weiteren Maßnahmen, den Schrumpf zu verringern, bevorzugt Treibmittel (f) und/oder Gase (c) eingesetzt werden.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Die Polyesterpolyole besitzen vorzugsweise eine Funktionalität von 2 bis 4, insbesondere 2 bis 3, und ein Molekulargewicht von 480 bis 3000, vorzugsweise 600 bis 2000 und insbesondere 600 bis 1500.

Die erfindungsgemäßen Verbundelemente werden bevorzugt unter Verwendung von Polyetherpolyalkoholen als Komponente (b) zur Umsetzung mit den Isocyanaten hergestellt, zweckmäßigerweise solche mit einer mittleren Funktionalität gegenüber Isocyanaten von 1,5 bis 8, bevorzugt 2 bis 6, besonders bevorzugt 2,5 bis 4 und einem Molekulargewicht von 400 bis 8000.

Die Verwendung von Polyetherpolyalkoholen bietet erhebliche Vorteile durch eine verbesserte Stabilität der Polyisocyanat-Polyadditionsprodukte gegen eine hydrolytische Spaltung und aufgrund der geringeren Viskosität, jeweils im Vergleich mit Polyesterpolyalkoholen. Die verbesserte Stabilität gegen Hydrolyse ist insbesondere bei einem Einsatz im Automobilaußenbereich vorteilhaft. Die geringere Viskosität der Polyetherpolyalkohole und der Reaktionsmischung zur Herstellung von (ii) enthaltend die Polyetherpolyalkohle ermöglicht eine einfachere Befüllung des Raumes zwischen (i) und (iii) mit der Reaktionsmischung zur Herstellung der Verbundelemente.

Als gegenüber Isocyanaten reaktive Verbindungen können des weiteren zusätzlich zu den genannten Verbindungen mit einem üblichen Molekulargewicht von 400 bis 8000 gegebenenfalls Diole und/oder Triole mit Molekulargewichten von 60 bis <400 als Kettenverlängerungs- und/oder Vernetzungsmittel bei dem erfindungsgemäßen Verfahren eingesetzt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Die Kettenverlängerungs- und/oder Vernetzungsmittel weisen vorzugsweise ein Molekulargewicht von 60 bis 300 auf. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan, niedermolekulare hydroxylgruppenhaltige Polyalkylenoxide auf Basis Ethylen- und/oder 1,2-Propylenoxid und den vorgenannten Diolen und/oder Triolen als Startermoleküle und/oder Diamine wie z.B. Diethyltoluendiamin und/oder 3,5-Dimethylthio-2,4-toluenediamin.

Sofern zur Herstellung der Polyisocyaynat-Polyadditionsprodukten Kettenverlängerungsmittel, Vernetzungsmittel oder Mischungen davon Anwendung finden, kommen diese zweckmäßigerweise in einer Menge von 0 bis 30 Gew.-%, vorzugsweise von 1 bis 30 Gew.-%, bezogen auf das Gewicht der insgesamt eingesetzten gegenüber Isocyanaten reaktiven Verbindungen (b), zum Einsatz.

Mit dem Einsatz von Amin-gestarteten Polyetherpolyalkoholen kann zudem das Durchhärteverhalten von der Reaktionsmischung zur Herstellung von (ii) verbessert werden. Bevorzugt werden die Verbindungen (b), wie auch die anderen Komponenten zur Herstellung von (ii), mit einem möglichst geringen Gehalt an Wasser eingesetzt, um die Bildung von Kohlendioxid durch Reaktion des Wassers mit Isocyanatgruppen zu vermeiden.

Die in den Isocyanat- und Polyolkomponenten verwendeten Substanzen haben üblicherweise unterschiedliche Funktionalitäten. Alle Substanzen mit einer Funktionalität von größer als zwei bewirken eine chemische Vernetzung des Polyisocyanat-Polyadditionsproduktes (ii). Die mittlere Molmasse zwischen zwei chemischen Vernetzungsstellen einer Polymerkette (Mc-Wert) kann z.B. nach PJ Flory, Polym. J. 17, 1 (1985) aus den Funktionalitäten und Massenanteilen der Einsatzstoffe berechnet werden. Zur Erfüllung der beschriebenen mechanischen Eigenschaften des Polyisocyanat-Polyadditionsproduktes (ii) wird die chemische Gesamtvernetzung, bevorzugt von der (a) Isocyanat- und (b) Polyolkomponente bevorzugt so eingestellt werden, dass sich ein Mc-Wert zwischen 900 und 2000 g/mol ergibt. Bevorzugt sind somit Polyisocyanat-Polyadditionsprodukte, bei den der Mc-Wert, bevorzugt berechnet nach PJ Flory, Polym. J. 17, 1 (1985), zwischen 900 g/mol und 2000 g/mol beträgt.

Als Komponente (c) zur Herstellung von (ii) können allgemein bekannte Verbindungen eingesetzt werden, die einen Siedepunkt bei einem Druck von 1 bar von kleiner (d.h. bei niedrigeren Temperaturen als) -50°C aufweisen, beispielsweise Luft, Kohlendioxid, Stickstoff, Helium und/oder Neon. Bevorzugt wird Luft eingesetzt. Die Komponente (c) ist bevorzugt gegenüber der Komponente (a), besonders bevorzugt gegenüber den Komponenten (a) und (b) inert, d.h. eine Reaktivität des Gases gegenüber (a) und (b) ist kaum, bevorzugt nicht nachzuweisen. Der Einsatz des Gases (c) unterscheidet sich grundlegend von dem Einsatz üblicher Treibmittel zur Herstellung von geschäumten Polyurethanen. Während übliche Treibmittel (f) flüssig eingesetzt werden oder im Falle der gasförmigen physikalischen Treibmittel in der Polyol-Komponente bis zu einem geringen Prozentsatz löslich sind und während der Umsetzung entweder aufgrund der Wärmeentwicklung verdampfen oder aber im Falle des Wassers aufgrund der Reaktion mit den Isocyanatgruppen gasförmiges Kohlendioxid entwickeln, wird in der vorliegenden Erfindung die Komponente (c) bevorzugt bereits gasförmig als Aerosol beispielsweise in der Polyolkomponente eingesetzt.

Als Katalysatoren (d) können allgemein bekannte Verbindungen eingesetzt werden, die die Reaktion von Isocyanaten mit den gegenüber Isocyanaten reaktiven Verbindungen stark beschleunigen, wobei vorzugsweise ein Gesamtkatalysatorgehalt von 0,001 bis 15 Gew.-%, insbesondere 0,05 bis 6 Gew.-%, bezogen auf das Gewicht der insgesamt eingesetzten gegenüber Isocyanaten reaktiven Verbindungen, verwendet wird. Beispielsweise können folgende Verbindungen verwendet werden: Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4-Diazabicyclo-(2,2,2)-octan (Dabco) und Alkanolaminverbindungen, wie Triethanolamin, Triisopropanolamin, N-Methyl- und N-Ethyl-diethanolamin, Dimethylaminoethanol, 2-(N,N-Dimethylaminoethoxy)ethanol, N,N',N''-Tris-(dialkylaminoalkyl)hexahydrotriazine, z.B. N,N',N''-Tris-(dimethylaminopropyl)-s-hexahydrotriazin, Eisen(II)-chlorid, Zinkchlorid, Bleioctoat und vorzugsweise Zinnsalze, wie Zinndioctoat, Zinndiethylhexoat, Dibutylzinndilaurat und/oder Dibutyldilaurylzinnmercaptid, 2,3-Dimethyl-3,4,5,6-tetrahydropyrimidin, Tetraalkylammoniumhydroxide, wie Tetramethylammoniumhydroxid, Alkalihydroxide, wie Natriumhydroxid, Alkalialkoholate, wie Natriummethylat und Kaliumisopropylat, und/oder Alkalisalze von langkettigen Fettsäuren mit 10 bis 20 C-Atomen und gegebenenfalls seitenständigen OH-Gruppen.

Es hat sich als sehr vorteilhaft erwiesen, die Herstellung von (ii) in Gegenwart von (d) durchzuführen, um die Reaktion zu beschleunigen.

Der Reaktionsmischung zur Herstellung der Polyisocyanat-Polyadditionsprodukte (ii) können gegebenenfalls (e) Hilfsmittel einverleibt werden. Genannt seien beispielsweise Füllstoffe, oberflächenaktive Substanzen, Farbstoffe, Pigmente, Flammschutzmittel, Hydrolyseschutzmittel, fungistatische, bakteriostatisch wirkende Substanzen und Schaumstabilisatoren.

Als oberflächenaktive Substanzen kommen z.B. Verbindungen in Betracht, welche zur Unterstützung der Homogenisierung der Ausgangsstoffe dienen und gegebenenfalls auch geeignet sind, die Struktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure. Die oberflächenaktiven Substanzen werden üblicherweise in Mengen von 0,01 bis 5 Gew.-%, bezogen auf 100 Gew.-% der insgesamt eingesetzten gegenüber Isocyanaten reaktiven Verbindungen (b), angewandt.

Geeignete Flammschutzmittel sind beispielsweise Trikresylphosphat, Tris-(2-chlorethyl)phosphat, Tris-(2-chlorpropyl)-phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-%, vorzugsweise 5 bis 25 Gew.-%, der genannten Flammschutzmittel, bezogen auf das Gewicht der insgesamt eingesetzten gegenüber Isocyanaten reaktiven Verbindungen, zu verwenden.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und Glasfasern geringer Länge. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern. Die anorganischen und organischen Füllstoffe können einzeln oder als Gemische verwendet werden.

Bevorzugt setzt man bei der Herstellung von (ii) 10 bis 70 Gew.-% Füllstoffe, bezogen auf das Gewicht von (ii), als (e) Hilfsmittel ein. Als Füllstoffe verwendet man bevorzugt Talkum, Kaolin, Calziumcarbonat, Schwerspat, Glasfasern und/oder Mikroglaskugeln. Die Größe der Partikel der Füllstoffe ist bevorzugt so zu wählen, daß das Eintragen der Komponenten zur Herstellung von (ii) in den Raum zwischen (i) und (iii) nicht behindert wird. Besonders bevorzugt weisen die Füllstoffe Partikelgrößen von < 0,5 mm auf. Die Füllstoffe können aber auch als interne Abstandhalter eingesetzt werden. In diesem Fall haben die Füllstoffe einen Durchmesser, der der Dicke der Schicht (ii) entspricht. In diesem Fall werden bevorzugt nur kleinere Mengen an Füllstoff von 1 bis 25 Gew.-%, bezogen auf das Gewicht von (ii), eingesetzt, um ein Verkleben, Verklumpen oder eine Agglomeration von mehreren Füllstoffpartikeln zu vermeiden.

Die Füllstoffe werden bevorzugt in Mischung mit der Polyolkomponente bei der Umsetzung zur Herstellung der Polyisocyanat-Polyadditionsprodukte eingesetzt.

Die Füllstoffe können dazu dienen, den im Vergleich beispielsweise zum Stahl größeren thermischen Ausdehnungskoeffizient der Polyisocyanat-Polyadditionsprodukte zu verringern und damit dem des Stahls anzupassen. Dies für einen nachhaltig festen Verbund zwischen den Schichten (i), (ii) und (iii) besonders vorteilhaft, da damit geringere Spannungen zwischen den Schichten bei thermischer Belastung auftreten.

Bevorzugt werden zur Herstellung von (ii) als (e) übliche Schaumstabilisatoren eingesetzt, die kommerziell erhältlich und dem Fachmann allgemein bekannt sind, beispielsweise allgemein bekannte Polysiloxan-Polyoxyalkylen-Blockcopolymere, z.B. Tegostab 2219 der Firma Goldschmidt. Der Anteil an diesen Schaumstabilisatoren bei der Herstellung von (ii) beträgt bevorzugt 0,001 bis 10 Gew.-%, besonders bevorzugt 0,01 bis 10 Gew.-%, insbesondere 0,01 bis 2 Gew.-%, bezogen auf das Gewicht der zur Herstellung von (ii) eingesetzten Komponenten (b), (e) und gegebenenfalls (d). Der Einsatz dieser Schaumstabilisatoren bewirkt, das die Komponente (c) in der Reaktionsmischung zur Herstellung von (ii) stabilisiert wird.

Als Treibmittel (f) können aus der Polyurethanchemie allgemein bekannte Treibmittel eingesetzt werden, beispielsweise physikalische und/oder chemische Treibmittel. Derartige physikalische Treibmittel weisen im allgemeinen einen Siedepunkt bei einem Druck von 1 bar von größer (d.h. bei höheren Temperaturen als) -50°C, bevorzugt -50°C bis 49°C auf. Beispiele für physikalische Treibmittel sind z.B. FCKW, HFCKW, HFKW, aliphatische Kohlenwasserstoffe, cycloaliphatische Kohlenwasserstoffe, jeweils beispielsweise mit 4 bis 6 Kohlenstoffatomen oder Gemische dieser Stoffe, beispielsweise Trichlorfluormethan (Siedepunkt 24°C), Chlordifluormethan (Siedepunkt -40,8°C), Dichlorfluorethan (Siedepunkt 32°C), Chlordifluorethan (Siedepunkt -9,2°C), Dichlortrifluorethan (Siedepunkt 27,1°C), Tetrafluorethan (Siedepunkt -26,5°C), Hexafluorbutan (Siedepunkt 24,6°C), iso-Pentan (Siedepunkt 28°C), n-Pentan (Siedepunkt 36°C), Cyclopentan (Siedepunkt 49°C).

Als chemische Treibmittel, d.h. Treibmittel die aufgrund einer Reaktion, beispielsweise mit Isocyanatgruppen, gasförmige Produkte bilden, kommen beispielsweise Wasser, Hydratwasser haltige Verbindungen, Carbonsäuren, tert.-Alkohole, z.B. t-Butanol, Carbamate, beispielsweise die in der Schrift EP-A 1 000 955, insbesondere auf den Seiten 2, Zeilen 5 bis 31 sowie Seite 3, Zeilen 21 bis 42 beschrieben Carbamate, Carbonate, z.B. Ammoniumcarbonat und/oder Ammoniumhydrogencarbonat und/oder Guanidincarbamat in Betracht. Bevorzugt werden als Treibmittel (f) Wasser und/oder Carbamate eingesetzt. Bevorzugt werden die Treibmittel (f) in einer Menge eingesetzt, die ausreicht, um die bevorzugte Dichte von (ii) von 800 bis 1200 kg/m³ zu erhalten. Dies kann mit einfachen Routineexperimenten, die dem Fachmann allgemein geläufig sind, ermittelt werden. Besonders bevorzugt werden die Treibmittel (f) in einer Menge von 0,05 bis 10 Gew.-%, insbesondere von 0,1 bis 5 Gew.-%, jeweils bezogen auf das Gesamtgewicht der Polyisocyanat-Polyadditionsprodukte, eingesetzt. Geringe Mengen an Treibmittel werden bevorzugt dann verwendet, wenn bei dem erfindungsgemäßen Herstellungsprozess ein Innendruck gegen die Pressen bzw. Rollen der Bandanlage aufgebaut werden soll.

Das Gewicht von (ii) entspricht per Definition dem Gewicht der zur Herstellung von (ii) eingesetzten Komponenten (a), (b) und gegebenenfalls (c), (d), (e) und/oder (f).

Zur Herstellung der erfindungsgemäßen Polyisocyanat-Polyadditionsprodukte werden die Isocyanate und die gegenüber Isocyanaten reaktiven Verbindungen in solchen Mengen zur Umsetzung gebracht, daß das Äquivalenzverhältnis von NCO-Gruppen der Isocyanate (a) zur Summe der reaktiven Wasserstoffatome der gegenüber Isocyanaten reaktiven Verbindungen (b) und gegebenenfalls (f) 0,85 bis 1,25 : 1, vorzugsweise 0,95 bis 1,15 : 1 und insbesondere 1 bis 1,05 : 1, beträgt. Falls (ii) zumindest teilweise Isocyanuratgruppen gebunden enthalten, wird üblicherweise ein Verhältnis von NCO-Gruppen zur Summe der reaktiven Wasserstoffatome von 1,5 bis 60 : 1, vorzugsweise 1,5 bis 8 : 1, angewandt.

Die Polyisocyanat-Polyadditionsprodukte werden üblicherweise nach dem one shot-Verfahren oder nach dem Prepolymerverfahren, beispielsweise mit Hilfe der Hochdruck- oder Niederdruck-Technik hergestellt.

Als besonders vorteilhaft hat es sich erwiesen, nach dem Zweikomponentenverfahren zu arbeiten und die gegenüber Isocyanaten reaktiven Verbindungen (b), gegebenenfalls die Treibmittel (f) und gegebenenfalls die Katalysatoren (d) und/oder Hilfsmittel (e) in der Komponente (A) (Polyolkomponente) zu vereinigen und bevorzugt innig miteinander zu vermischen und als Komponente (B) die Isocyanate (a) zu verwenden.

Die Komponente (c) kann der Reaktionsmischung enthaltend (a), (b) und gegebenenfalls (f), (d) und/oder (e) zugeführt werden, und/ oder den einzelnen, bereits beschriebenen Komponenten (a), (b),
(A) und/oder (B). Die Komponente, die mit (c) gemischt wird, liegt üblicherweise flüssig vor. Bevorzugt wird die Komponente in die Komponente (b) gemischt.

Das Mischen der entsprechenden Komponente mit (c) kann nach allgemein bekannten Verfahren erfolgen. Beispielsweise kann (c) durch allgemein bekannte Beladungseinrichtungen, beispielsweise Luftbeladungseinrichtungen, bevorzugt unter Druck, beispielsweise aus einem Druckbehälter oder durch einen Kompressor komprimiert, z.B. durch eine Düse der entsprechenden Komponente zugeführt werden. Bevorzugt erfolgt eine weitgehende Durchmischung der entsprechende Komponenten mit (c), so dass Gasblasen von (c) in der üblicherweise flüssigen Komponente bevorzugt eine Größe von 0,0001 bis 10, besonders bevorzugt 0,0001 bis 1 mm aufweisen. Der Gehalt an (c) in der Reaktionsmischung zur Herstellung von (ii) kann in der Rücklaufleitung der Hochdruckmaschine mit allgemein bekannten Messgeräten über die Dichte der Reaktionsmischung bestimmt werden. Die Gehalt an (c) in der Reaktionsmischung kann über eine Kontrolleinheit bevorzugt automatisch auf der Grundlage dieser Dichte reguliert werden. Die Komponentendichte kann während der üblichen Zirkulation des Materials in der Maschine auch bei sehr niedriger Zirkulationsgeschwindigkeit online bestimmt und reguliert werden.

Der Verbund ist durch folgende Eigenschaften gekennzeichnet:

Das Verbundelement ist wesentlich leichter als eine Stahlplatte mit vergleichbarer Steifigkeit. Tiefziehen, Verformen, Pressen oder Biegen des Verbundes führt zu keinen Delaminationen oder Knicken auf der Außenseite. Ein Bauteil aus dem Verbundelement bleibt auch nach einer Wärmelagerung von 1 h bei 200°C dimensionsstabil. Der Verbund führt im Vergleich zu Metall zu einer verbesserten Vibrations- und Geräuschdämmung. Zur verbesserten Geräuschdämmung können auch Füllstoffe wie Ruß, Kalziumcarbonat, Talk oder Mika zu einer oder mehreren Polymerschichten hinzugegeben werden. Der Verbund hat ein verbessertes Energieabsorptionsvermögen bei Zusammenstößen als Metall. Der Verbund hat ein verbesserte Isolationswirkung gegen hohe und tiefe Temperaturen als Metall.

### Beispiele

Polyol A ist ein mit Glycerin gestartetes Polypropylenoxid-Polyethylenoxid-Blockcopolymer mit einem Molekulargewicht von 5400 g/mol, einer OH-Zahl von 28 mg KOH/g und einer Funktionalität von 2,7.

Polyol B ist ein mit Glycerin gestartetes Polypropylenoxid-Polyethylenoxid-Blockcopolymer mit einem Molekulargewicht von 5300 g/mol, einer OH-Zahl von 26 mg KOH/g und einer Funktionalität von 2,5.

Iso A ist Mischung aus 50 % 4,4'-MDI und 50 % 2,4'-MDI mit einem NCO-Anteil von 33,5 % und einer Funktionalität von 2.

Iso B ist ein Polymer-MDI mit einem NCO-Anteil von 31,4 % und einer Funktionalität von 2,7.

Iso C ist ein carbodiimitisiertes Monomer MDI mit einem NCO-Anteil von 29,5 % und einer Funktionalität von 2,2.

Iso D ist ein Isocyanatprepolymer aus 87% 4,4'-MDI, 8,1 % Dipropylenglycol und 4,9% eines Propylenglycol gestarteten Polypropylenoxid-Homopolymers mit einem NCO-Anteil von 23 % und einer Funktionalität von 2,1.

| Beispiel | 1 | 2 | 3 | 4 | 5 | 6 |
|---|---|---|---|---|---|---|
| | | | | | | |
| Polyol A [g] | 64,5 | | | | 69 | 69 |
| Polyol B [g] | | 66,5 | 66 | 66,5 | | |
| Vernetzer [g] | 25 | 15 | 15 | 15 | 15 | 15 |
| 1,4-Butandiol [g] | 5 | 13 | 13 | 13 | 13 | 13 |
| Siloxan [g] | 1 | 1 | 1 | 1 | 1 | 1 |
| Silikat [g] | 2 | 2 | 2 | 2 | 2 | 2 |
| Iso A [g] | 71 | 39 | | 53,9 | | |
| Iso B [g] | | 39 | | 23,1 | | |
| Iso C [g] | | | 86 | | | |
| Iso D [g] | | | | | 110 | 110 |
| Bruchdehnung [%] | 49,1 | 55,1 | 58,1 | 60,2 | 100,7 | 102,5 |
| Speichermodul bei 25°C [MPa] | 184 | 271 | 290 | 243 | 276 | 228 |
| Speichermodul bei 80°C [MPa] | 68 | 91 | 140 | 61 | 120 | 102 |
| Speichermodul bei 200°C [MPa] | 7,5 | 5,7 | 4,7 | 5,4 | 4,6 | 3,6 |
| Peel Strength [N/cm] | 49,6 | 43,4 | 46,7 | 47,8 | 52 | 53,5 |
| Glastemperatur [°C] | 117 | 111 | 127 | 102 | 115 | 119 |
| Mc-Wert [g/mol] | 980 | 1001 | 1086 | 1193 | 1755 | 1755 |

Die Bruchdehnung und Speichermodul wurden am Elastomeren (ohne Metall) bestimmt.

Für die Bestimmung der Peel Strength im T-Peel Test wurden Stahl/ Polyurethan/Stahl-Verbunde mit einer Größe von 28 x 18 cm² hergestellt. Die Stahlplatten der Bauteile waren galvanisiert und hatten eine Dicke von jeweils 0,25 mm. Die Elastomerdicke betrug 1 mm. Die zuvor erwähnten Verbundplatten wurden in elf Probekörper der Größe 2,5 x 18 cm2 geschnitten. Von diesen elf Probekörpern wurde die T-Peel-Strength bestimmt und der Mittelwert ist in der obigen Tabelle eingetragen. Die Bestimmung der T-Peel Strength erfolgt folgendermaßen: Bei einem Verbund-Probekörper mit der Dimension 2,5 x 18 x 0,15 cm³ auf der Stirnseite des Probekörpers auf einer Tiefe von 1,5 cm das Elastomer von beiden Stahlplatten mechanisch gelöst. Die nun überstehenden Stahlplatten werden in einem Winkel von 90° umgebogen und in eine Zugprüfmaschine eingespannt. Die Stahlplatten werden auseinandergezogen, wobei der Probekörper weiterhin einen Winkel von 90° zur Zugrichtung hat. Die Kraft, die zum Ablösen des Elastomeren vom Stahl notwendig ist, wird aufgezeichnet.

Die Herstellung der Stahl/Polyurethan/Stahl-Verbunde mit einer Größe von 28 x 18 cm2 erfolgte folgendermaßen: Auf die untere Stahlplatte wurde als Abstandhalter ein Rahmen mit der Dicke 1 mm gelegt und das flüssige Reaktionsgemisch wurde in die Rahmenmitte aufgetragen und verteilt. Die obere Stahlplatte wurde von einer Seite her abgerollt. Der so entstandene Verbund wurde mit einer Stahlplatte mit einem Gewicht von 4,5 kg beschwert und 15 min bei 130°C gelagert. Probe 6 wurde anschließend zusätzlich für 1 h bei 130°C gelagert.

Zusätzlich zu den oben genannten Tests wurden die Reaktionsmischungen der Proben 1 bis 5 jeweils in ein DSC-Pfännchen gegeben und 30 min bei 130°C im Trockenschrank gelagert. Anschließend wurde das Pfännchen in der DSC von 100 bis 200°C mit einer Heizrate von 20 K/min aufgeheizt und 1 h bei 200°C isotherm gehalten. Als Ergebnis zeigt sich während der isothermen Lagerung keine exotherme oder endotherme Reaktion. Die Masse des PUR blieb während der Messung konstant. Dies zeigt, das die in den Beispielen 1 bis 5 dargestellten Elastomere die geforderte Temperaturstabilität erfüllen.

Die Glastemperatur ist das bei höheren Temperaturen liegende Maximum der tan Delta-Kurve, die bei der Torsionsmodulmessung aus den beiden gemessenen Speicher- und Verlustmodulkurven berechnet wird.

## Patentansprüche

1. Verbundelemente, die die folgende Schichtstruktur aufweisen:
(i) 0,05 mm bis 2 mm Metall,
(ii) 0,1 mm bis 2 mm Polyisocyanat-Polyadditionsprodukte mit einem Speichermodul nach DIN EN ISO 6721 zwischen 60 und 350 MPa bei Temperaturen zwischen -20 und +80°C und/oder einem Speichermodul nach DIN EN ISO 6721 von mindestens 1, 7 MPa bei Temperaturen zwischen +160 und +220°C und einer Bruchdehnung nach DIN EN ISO 527 von größer 30 %,
(iii) 0,05 mm bis 2 mm Metall.

2. Verbundelemente gemäß Anspruch 1, **dadurch gekennzeichnet, dass** die Polyisocyanat-Polyadditionsprodukte eine Dichte von 800 bis 1200 kg/m³ aufweisen.

3. Verbundelemente gemäß Anspruch 1, **dadurch gekennzeichnet, dass** die (ii) Polyisocyanat-Polyadditionsprodukte eine Haftung an die Schicht (i) und/oder (iii) im T-Peel-Test von mindestens 30 N/cm aufweisen.

4. Verbundelemente gemäß Anspruch 1, **dadurch gekennzeichnet, dass** die (ii) Polyisocyanat-Polyadditionsprodukte eine Glastemperatur von größer 75°C aufweisen.

5. Verbundelemente gemäß Anspruch 1, **dadurch gekennzeichnet, dass** die (ii) Polyisocyanat-Polyadditionsprodukte Füllstoffe enthalten, deren Durchmesser dem Durchmesser der Schicht (ii) entspricht.

6. Automobiltüren, Kotflügel, Automobildächer, Motorhauben von Automobilen, Heckklappen von Automobilen, Außenhaut von Flugzeugen auf der Basis von Verbundelementen gemäß Anspruch 1.

7. Verfahren zur Herstellung von Karosserieteilen von Automobilen, Lastkraftwagen oder Flugzeugen, **dadurch gekennzeichnet, dass** man Verbundelemente, die die folgende Schichtstruktur aufweisen:
(i) 0,05 mm bis 2 mm Metall,
(ii) 0,1 mm bis 2 mm Polyisocyanat-Polyadditionsprodukte,
(iii) 0,05 mm bis 2 mm Metall
in einer Presse formt.

8. Verfahren gemäß Anspruch 7, **dadurch gekennzeichnet, dass** man in einem kontinuierlichen Prozess das Metall der Schichten (i) und (iii) in eine Bandanlage einführt und in dieser Bandanlage die flüssigen Ausgangskomponenten zur Herstellung der (ii) Polyisocyanat-Polyadditionsprodukte zwischen (i) und (iii) einträgt, nach Umsetzung der Ausgangskomponenten zur Herstellung von (i i) das Verbundelement gegebenenfalls zuschneidet und in einer Presse formt.

9. Verfahren gemäß Anspruch 7, **dadurch gekennzeichnet, dass** man in einem kontinuierlichen Prozess das Metall der Schichten (i) und (iii) sowie zwischen diese Schichten eine Polyisocyanat-Polyadditionsprodukt-Folie (ii) mit einer Dicke zwischen 0,1 mm und 2 mm in eine Bandanlage einführt und in dieser Bandanlage miteinander haftend verbindet, das Verbundelement gegebenenfalls zuschneidet und in einer Presse formt.

10. Verfahren gemäß Anspruch 7, **dadurch gekennzeichnet, dass** man die Verbundelemente in einer Presse kalt- oder warmumformt.

11. Verfahren gemäß Anspruch 7, **dadurch gekennzeichnet, dass** man das in der Presse geformte Karosserieteil lackiert.

12. Verfahren gemäß Anspruch 11, **dadurch gekennzeichnet, dass** man den Lack bei einer Temperatur von mindestens 180°C trocknet.

## Claims

1. A composite element which has the following layer structure:
(i) from 0.05 to 2 mm of metal,
(ii) from 0.1 to 2 mm of polyisocyanate polyaddition products whose storage modulus to DIN EN ISO 6721 is from 60 to 350 MPa at temperatures of from -20 to +80°C and/or whose storage modulus to DIN EN ISO 6721 is at least 1.7 MPa at temperatures of from +160 to +220°C and whose tensile strain at break to DIN EN ISO 527 is greater than 30%,
(iii) from 0.05 to 2 mm of metal.

2. The composite element according to claim 1, wherein the density of the polyisocyanate polyaddition products is from 800 to 1200 kg/m³.

3. The composite element according to claim 1, wherein the adhesion of the polyisocyanate polyaddition products (ii) to the layer (i) and/or (iii) in the T-peel test is at least 30 N/cm.

4. The composite element according to claim 1, wherein the glass transition temperature of the polyisocyanate polyaddition products (ii) is greater than 75°C.

5. The composite element according to claim 1, wherein the polyisocyanate polyaddition products (ii) comprise fillers whose diameter corresponds to the diameter of the layer (ii).

6. Doors for automobiles, wheel surrounds, roofs for automobiles, engine hoods for automobiles, tailgates for automobiles, or an outer skin for aircraft, based on composite elements according to claim 1.

7. A process for producing bodywork parts for automobiles, for trucks, or for aircraft, which comprises molding, in a press, composite elements which have the following layer structure:
(i) from 0.05 to 2 mm of metal,
(ii) from 0.1 to 2 mm of polyisocyanate polyaddition products,
(iii) from 0.05 to 2 mm of metal.

8. The process according to claim 7, wherein, in a continuous process, the metal of the layers (i) and (iii) is introduced into a belt system, and within this belt system the liquid starting components for preparing the polyisocyanate polyaddition products (ii) are introduced between (i) and (iii), and, after reaction of the starting components for preparing (ii), the composite element is cut to size, where appropriate, and molded in a press.

9. The process according to claim 7, wherein, in a continuous process, the metal of the layers (i) and (iii), and also, between these layers, a polyisocyanate polyaddition product film (ii) whose thickness is from 0.1 to 2 mm, are introduced into a belt system and, within this belt system, adhesive-bonded to one another, and the composite element is cut to size, where appropriate, and molded in a press.

10. The process according to claim 7, wherein the composite elements are cold- or hot-formed in a press.

11. The process according to claim 7, wherein the bodywork part molded in the press is painted.

12. The process according to claim 11, wherein the paint is dried at a temperature of at least 180°C.

## Revendications

1. Éléments composites, qui présentent la structure stratifiée suivante :
(i) 0,05 mm à 2 mm de métal,
(ii) 0,1 mm à 2 mm de produits de polyaddition de polyisocyanate ayant un module de conservation selon DIN EN ISO 6721 compris entre 60 et 350 MPa à des températures comprises entre -20 et +80 °C et/ou un module de conservation selon DIN EN ISO 6721 d'au moins 1,7 MPa à des températures comprises entre +160 et +220 °C et un allongement à la rupture selon DIN EN ISO 527 supérieur à 30 %,
(iii) 0,05 mm à 2 mm de métal.

2. Éléments composites selon la revendication 1, **caractérisés en ce que** les produits de polyaddition de polyisocyanate présentent une densité de 800 à 1 200 kg/m³.

3. Éléments composites selon la revendication 1, **caractérisés en ce que** les (ii) produits de polyaddition de polyisocyanate présentent une adhésion à la couche (i) et/ou (iii) lors du test de pelage en T d'au moins 30 N/cm.

4. Éléments composites selon la revendication 1, **caractérisés en ce que** les (ii) produits de polyaddition de polyisocyanate présentent une température de transition vitreuse supérieure à 75 °C.

5. Éléments composites selon la revendication 1, **caractérisés en ce que** les (ii) produits de polyaddition de polyisocyanate contiennent des charges dont le diamètre correspond au diamètre de la couche (ii).

6. Portes d'automobiles, garde-boue, toits d'automobiles, capots d'automobiles, hayons d'automobiles, coque d'avions à base d'éléments composites selon la revendication 1.

7. Procédé de fabrication de parties de carrosserie d'automobiles, de camions ou d'avions, **caractérisé en ce que** des éléments composites qui présentent la structure stratifiée suivante :
(i) 0,05 mm à 2 mm de métal,
(ii) 0,1 mm à 2 mm de produits de polyaddition de polyisocyanate,
(iii) 0,05 mm à 2 mm de métal sont mis en forme dans une presse.

8. Procédé selon la revendication 7, **caractérisé en ce que**, selon un procédé continu, le métal des couches (i) et (iii) est inséré dans un transporteur à bande et, dans ce transporteur à bande, les composants liquides pour la fabrication des (ii) produits de polyaddition de polyisocyanate sont introduits entre (i) et (iii), après réaction des composants pour la fabrication de (ii), l'élément composite est éventuellement découpé et mis en forme dans une presse.

9. Procédé selon la revendication 7, **caractérisé en ce que**, selon un procédé continu, le métal des couches (i) et (iii), ainsi qu'entre ces couches un film de produit de polyaddition de polyisocyanate (ii) d'une épaisseur comprise entre 0,1 mm et 2 mm sont introduits dans un transporteur à bande et reliés par adhésion les uns aux autres dans ce transporteur à bande, l'élément composite est éventuellement découpé et mis en forme dans une presse.

10. Procédé selon la revendication 7, **caractérisé en ce que** les éléments composites sont mis en forme à froid ou à chaud dans une presse.

11. Procédé selon la revendication 7, **caractérisé en ce que** la partie de carrosserie mise en forme dans la presse est laquée.

12. Procédé selon la revendication 11, **caractérisé en ce que** la laque est séchée à une température d'au moins 180 °C.
